(19)

Europäisches
Patentamt
European
Patent Office
Office européen
des brevets

(11) **EP 2 573 837 B1**

(12) **EUROPEAN PATENT SPECIFICATION**

(45) Date of publication and mention
of the grant of the patent:
**24.02.2016 Bulletin 2016/08**

(21) Application number: **11860631.8**

(22) Date of filing: **07.03.2011**

(51) Int Cl.:
*H01M 2/16* (2006.01)     *H01M 10/0525* (2010.01)

(86) International application number:
**PCT/JP2011/055198**

(87) International publication number:
**WO 2012/120608 (13.09.2012 Gazette 2012/37)**

(54) **BATTERY SEPARATOR AND BATTERY**

BATTERIESEPARATOR UND BATTERIE

SÉPARATEUR DE BATTERIE ET BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.03.2013 Bulletin 2013/13**

(73) Proprietor: **Hitachi Maxell, Ltd.
Ibaraki-shi
Osaka 567-8567 (JP)**

(72) Inventors:
• **KATAYAMA, Hideaki
Otokuni-gun,
Kyoto 618-8525 (JP)**

• **MATSUMOTO, Nobuaki
Ibaraki-shi
Osaka 567-8567 (JP)**

(74) Representative: **Diehl & Partner GbR
Patentanwälte
Erika-Mann-Strasse 9
80636 München (DE)**

(56) References cited:
**EP-A1- 2 153 990      WO-A1-2009/028734
WO-A1-2010/143677    JP-A- 2007 118 588
JP-A- 2010 036 355     JP-A- 2010 277 723
JP-A- 2011 008 966     JP-A- 2011 044 419
US-A1- 2004 106 037**

**Description**

Technical Field

The present invention relates to a battery separator, with which a battery with improved safety can be formed, and to a battery including the separator.

Background Art

Lithium secondary batteries are characterized by a high energy density, and thus have been used broadly as power sources for portable devices such as portable phones and notebook personal computers. As portable devices have higher performance, the capacity of lithium secondary batteries become more important. For this reason, ensuring the safety of lithium secondary batteries is gaining importance.

In current lithium secondary batteries, for example, polyolefin microporous films having a thickness of about 20 to 30 $\mu$m are used as a separator interposed between the positive and negative electrodes. Low melting point polyethylene (PE) may be used as a material of separator in order to ensure a so-called shutdown effect, where the constituent resin of the separator is allowed to close the pores by melting at a temperature equal to or lower than the thermal runaway temperature of a battery, thereby increasing the internal resistance of the battery to improve the safety of the battery at the time of a short circuit or the like.

Tb improve the porosity and the strength, the above separator may be formed of a uniaxially- or biaxially-oriented film. Since the separator is provided as an independent film, certain strength is needed in view of workability, and the drawing ensures the strength of the separator. In such a uniaxially- or biaxially-oriented film, however, the degree of crystallinity of the constituent resin is increased, and the shutdown temperature is also raised close to the thermal runaway temperature of the battery. Thus, it is to say that the margin for safety of the battery is insufficient.

Moreover, the separator has strain by drawing and may shrink due to residual stress when it is exposed to high temperatures. The shrinkage temperature is very close to the melting point, namely, the shutdown temperature. Therefore, when the polyolefin microporous film is used as a separator, a rise in temperature of the battery has to be prevented by reducing the current as soon as the temperature of the battery reaches the shutdown temperature due to abnormal charge or the like. If the pores are not sufficiently closed and the current cannot be immediately reduced, the temperature of the battery can easily raise to the shrinkage temperature of the separator, so that ignition may occur due to an internal short circuit.

In order to improve battery safety against thermal shrinkage of a separator as above mentioned and to enhance battery reliability against an internal short circuit resulting from various causes, the present inventors developed a porous separator for an electrochemical device, including a first separator layer predominantly composed of a resin for ensuring the shutdown function and a second separator layer predominantly composed of a filler having a heat-resistant temperature of 150°C or higher, and they already filed a patent application for the separator (Patent Document 1).

Of the separator for an electrochemical device disclosed in Patent Document 1, the second separator layer serves as a layer for mainly ensuring the fundamental function of the separator, i.e., the function of preventing a short circuit resulting from direct contact between the positive and negative electrodes. The filler having a heat-resistant temperature of 150°C or higher included in the second separator layer not only ensures the function of preventing a short circuit but also prevents thermal shrinkage of the separator. And the shutdown function, which the second separator layer cannot have, is ensured due to the first separator layer being provided together with the second separator layer.

Prior Art Documents are Patent Document 1: WO 2007/66768 A1, EP 2153990, US 2004/0106037, WO 2010/143677, JP2011-8966, JP 2007-118588 and JP 2011-44419.

Disclosure of Invention

Problem to be Solved by the Invention

However, if an increase in the capacity and an increase in the output density of batteries further advance, it is expected that even the separator described in Patent Document 1 may not be able to ensure the safety of the batteries. In this regard, there is still a room for improvement of the technique described in Patent Document 1.

With the foregoing in mind, an object of the present invention is to provide a battery separator with which a battery with improved safety can be formed, and a battery including the separator.

Means for Solving Problem

In order to achieve the above object, the battery separator according to claim 1 is provided. The battery separator of the present invention includes a multilayer porous film including at least a resin porous film (I) and a heat-resistant porous layer (II) predominantly composed of heat-resistant fine particles. The battery separator shuts down at a temperature of 100 to 150°C and at a speed of 50 $\Omega$/min·cm$^2$ or higher. The shutdown temperature and the shutdown speed of the battery separator of the present invention are determined by the following methods.

Shutdown Temperature

A laminate in which the battery separator being 25 mm in diameter is disposed between two stainless steel plates being 16 mm in diameter is placed in a cell, and an electrolyte prepared by dissolving $LiPF_6$ at a concentration of 1.0 mol/L in a mixed solvent of ethylene carbonate and methyl ethyl carbonate at a volume ratio of 1:2 is further injected into the cell, and the cell is hermetically sealed. Then, the cell is placed in a thermostatic oven, and the temperature of the thermostatic oven is raised at a rate of 1°C/min. In the mean time, the resistance between the two stainless steel plates of the laminate is kept measured, and the temperature at which the resistance reached 40 $\Omega$ is taken as the shutdown temperature of the separator.

Shutdown Speed

After measuring the shutdown temperature, the temperature of the thermostatic oven is kept raised and the resistance between the two stainless steel plates of the laminate is kept measured. And from a change in the resistance from 10 $\Omega$ before the shutdown temperature to 10 $\Omega$ after the shutdown temperature in total of 20 $\Omega$, the shutdown speed of the separator is calculated using the following formula (1).

$$V_{SD} = (50 - 30) / \{(t_{50} - t_{30}) \cdot S\} \qquad (1)$$

Where $V_{SD}$ is the shutdown speed ($\Omega$/min·cm$^2$), $t_{50}$ is the time (min) lapsed until the resistance reaches 50 $\Omega$, $t_{30}$ is the time (min) lapsed until the resistance reaches 30 $\Omega$, and S is the area (cm$^2$) of the stainless steel plates.

Further, the battery of the present invention includes a positive electrode having an active material capable of intercalating and deintercalating Li (lithium) ions, a negative electrode having an active material capable of intercalating and deintercalating Li ions, an organic electrolyte, and the battery separator of the present invention.

Effects of the Invention

According to the present invention, it is possible to provide a battery separator with which a battery with improved safety can be formed, and a battery including the separator. That is, the battery of the present invention has an excellent level of safety.

Description of the Invention

The battery separator of the present invention is a battery separator according to claim 1. It includes a multilayer porous film including at least a resin porous film (I) and a heat-resistant porous layer (II) predominantly composed of heat-resistant fine particles.

The resin porous film (I) of the battery separator (hereinafter it may be simply referred to as the "separator") of the present invention has a shutdown temperature as determined by the above-described method (hereinafter simply referred to as a "shutdown temperature") of 100 to 150°C and a shutdown speed as determined by the above-described method (hereinafter simply referred to as a "shutdown speed") of 50 $\Omega$/min·cm$^2$ or higher.

In the separator of the present invention, the shutdown speed is 50 $\Omega$/min·cm$^2$ or higher, and is preferably 70 $\Omega$/min·cm$^2$ or higher. Even if the temperature of the battery using the separator having such a shutdown speed rises due to abnormalities such as an internal short circuit, overcharging and the like, the separator can shut the pores right away, thereby preventing a further flow of current. Therefore, it is possible to ensure the safety of the battery at a high level.

An upper limit to the shutdown speed of the separator of the present invention is not particularly limited but is normally about 1,000 $\Omega$/min·cm$^2$.

Further, the shutdown temperature of the separator of the present invention as determined by the above-described method is 100°C or more, and preferably 110°C or more, and is 150°C or less, and more preferably 140°C or less. As a result of the separator having such a shutdown temperature, it is possible to form a battery in which good lithium ion conductivity is ensured under normal use conditions and safety is ensured under abnormal conditions by the shutdown.

Moreover, the separator of the present invention has a post-shutdown resistance of preferably 500 $\Omega/\text{cm}^2$ or more, and more preferably 1,000 $\Omega/\text{cm}^2$ or more, the post-shutdown resistance being a resistance determined by the following method (hereinafter simply referred to as the "post-shutdown resistance"). When the post-shutdown resistance of the separator is small, a trace amount of current may continue to flow between the positive and negative electrodes even after the shutdown, and this may impair the effect of improving the safety of the battery using the separator. However, since the separator having the above post-shutdown resistance can reduce, as much as possible, the amount of current flowing between the positive and negative electrodes during the shutdown, a safer battery can be formed.

An upper limit to the post-shutdown resistance is not particularly limited but is normally about 10,000 $\Omega/\text{cm}^2$.

The post-shutdown resistance of the separator is determined by the following method. After measuring the shutdown temperature, the temperature of the thermostatic oven is kept raised and the resistance between the two stainless steel plates of the laminate is kept measured to determine the highest reaching resistance, and the post-shutdown resistance is calculated from the following formula (2).

$$R_{SD} = R_f / S \qquad (2)$$

Where $R_{SD}$ is the post-shutdown resistance ($\Omega/\text{cm}^2$) of the separator, $R_f$ is the highest reaching resistance ($\Omega$) after the shutdown, and S ($\text{cm}^2$) is the area of the stainless steel plates.

Further, it is preferable that the separator of the present invention has air permeability of 10 to 600 sec/100mL, which is represented by a Gurley value. Here, the Gurley value is obtained in accordance with JIS P 8117 and expressed as the length of time (seconds) it takes for 100 mL air to pass through the membrane at a pressure of 0.879 $\text{g/mm}^2$. If the air permeability of the separator is too large, the ion permeability may decline. On the other hand, if the air permeability is too small, the strength of the separator may decline.

Moreover, in the separator of the present invention, the relationship $R - S \leq 0.01$ is preferably satisfied, where S ($\mu\text{m}$) is the bubble point pore size of the separator as a whole, and R ($\mu\text{m}$) is the bubble point pore size of the resin porous film (I).

The term "bubble point pore size" as used herein refers to a pore size (the largest pore size) calculated from the following formula (3) using a bubble point value P (Pa) measured in accordance with JIS K 3832. For example, a device used in Examples (described later) may be used to determine the bubble point pore size.

$$d = (K4\gamma\cos\theta) / P \qquad (3)$$

Where d is the bubble point pore size ($\mu\text{m}$), $\gamma$ is the surface tension (mN/m), $\theta$ is the contact angle (°), and K is the capillary constant.

That is, the difference between the bubble point pore size S of the separator as a whole and the bubble point pore size R of the resin porous film (1) (i.e., R - S) being smaller means that the pore size of the heat-resistant porous layer (II) is equal to or larger than that of the resin porous film (I). In a battery using such a separator, the heat-resistant porous layer (II) is less likely to interfere with movements of ions, so that deterioration of the battery characteristics, such as load characteristics, can be suppressed more favorably. The value of R-S is more preferably 0.001 or less.

The bubble point pore size of the separator as a whole is preferably 0.05 $\mu\text{m}$ or more, and more preferably 0.1 $\mu\text{m}$ or more, and preferably 5 $\mu\text{m}$ or less, and more preferably 1 $\mu\text{m}$ or less. Furthermore, the bubble point pore size of the resin porous film (I) is preferably 0.01 $\mu\text{m}$ or more, and more preferably 0.05 $\mu\text{m}$ or more, and preferably 0.5 $\mu\text{m}$ or less, and more preferably 0.3 $\mu\text{m}$ or less.

Further, in the separator of the present invention, the porosity A of the resin porous film (I) is preferably 30 to 70%, and the porosity B of the heat-resistant porous layer (II) is preferably 30 to 75%. Moreover, it is more preferable that the porosities A and B satisfy the relationship $A \leq B$.

If the porosity of the resin porous film (I) and that of the heat-resistant porous layer (II) are equal to or greater than the lower limits described above, ions become easily movable in the battery, so that deterioration of the battery characteristics, such as load characteristics, can be suppressed more favorably. Further, if the porosity of the resin porous film (I) and that of the heat-resistant porous layer (II) are equal to or smaller than the upper limits described above, the strength of the resin porous film (I) and that of the heat-resistant porous layer (II) can be improved and the ease of handling of the resin porous film (I) and the heat-resistant porous layer (II) becomes favorable. Further, if the porosity A of the resin porous film (I) and the porosity B of the heat-resistant porous layer (II) satisfy the relationship $A \leq B$, the heat-resistant layer (II) becomes less likely to interfere with movements of ions in the battery, so that deterioration of the battery characteristics, such as load characteristics, can be suppressed more favorably.

Further, in order to ensure the retention of a nonaqueous electrolyte to improve the ion permeability of the separator, the porosity of the separator as a whole is preferably 30% or more in a dry state. On the other hand, from viewpoints of ensuring the strength of the separator and preventing an internal short circuit, the porosity of the separator is preferably 70% or less in a dry state. The porosity C (%) of the separator can be calculated from the thickness and the mass per unit area of the separator, and the density of each constituent of the separator by obtaining a summation of each component i using the following formula (4).

$$C = \{1 - (m / t) / (\textstyle\sum a_i \cdot \rho_i)\} \times 100 \quad (4)$$

Where $a_i$ is the proportion of component i to the total mass (1), $\rho_i$ is the density of component i (g / cm$^3$), m is the mass per unit area (g / cm$^2$) of the separator, and t is the thickness (cm) of the separator.

Further, in place of the porosity C of the separator, the porosity A (%) of the resin porous film (I) can be determined using the formula (4), where m is the mass per unit area (g / cm$^2$) of the resin porous film (I), and t is the thickness (cm) of the resin porous film (I). Furthermore, in place of the porosity C of the separator, the porosity B (%) of the heat-resistant porous layer (II) can be determined using the formula (4), where m is the mass per unit area (g / cm$^2$) of the heat-resistant porous layer (II), and t is the thickness (cm) of the heat-resistant porous layer (II).

There is no particular limitation to the resin porous film (I) of the multilayer porous film that forms the separator of the present invention as long as the resin porous film (I) prevents a short circuit between the positive and negative electrodes, is ion permeable and stable against redox reactions in the battery and against an electrolyte, such as an organic electrolyte, used in the battery.

However, the resin porous film (I) needs to include a resin characterized in melting or softening at a certain temperature or higher and thereby imparting the shutdown characteristics to the separator. More specifically, it is preferable that the resin porous film (I) includes a resin having a melting point of 80 to 150°C [hereinafter referred to as the resin (A)].

The melting point of the resin (A) and those of other resins mentioned herein can be each determined from a melting temperature measured in accordance with JIS K 7121 with a differential scanning calorimeter (DSC), for example.

Specific examples of the resin (A) having the above melting point include polyethylene (PE), copolymerized polyolefins, polyolefin derivatives (e.g., chlorinated polyethylene), polyolefin wax, petroleum wax, and carnauba wax. Examples of copolymerized polyolefins include ethylene-vinyl monomer copolymers, more specifically, ethylene-propylene copolymers, ethylene-vinyl acetate copolymers (EVA), and ethylene-acrylic acid copolymers (e.g., ethylene-methylacrylate copolymers, and ethylene-ethylacrylate copolymers). The ethylene-derived structural unit content of the copolymerized polyolefins is desirably 85 mol% or more. Further, it is also possible to use polycycloolefins.

As the resin (A), any of the resins mentioned above may be used alone or in combination of two or more. The resin (A) of the resin porous film (I) preferably is PE, polyolefin wax, or EVA whose ethylene-derived structural unit content is 85 mol% or more, and more preferably includes PE alone or PE as a main component. The resin (A) may include a variety of known additives for resins (e.g., an antioxidant) as needed.

The resin porous film (I) is a microporous film predominantly composed of the resin (A). The term "microporous film predominantly composed of the resin (A)" as used herein refers to a microporous film in which the volume percentage of the resin (A) is 50 vol% or more (of the total volume (100 vol%) of the constituents of the microporous film except the pore portions).

As such a microporous film, it is possible to use any of the conventionally-known microporous films made of polyolefin (e.g., copolymerized polyolefins such as PE, and an ethylene-propylene copolymer) that are used in batteries such as lithium secondary batteries, namely, films and sheets made of polyolefin mixed with an organic filler and the like and drawn uniaxially or biaxially to have a microporous structure. As the resin porous film (I), it is also possible to use those produced by mixing the resin (A) with other resin to form a film or sheet, and immersing the film or sheet into a solvent that dissolves only the other resin to form pores.

To improve, for example, the strength of the resin porous film (I), a filler and the like may also be included in the resin porous film (I) to such an extent that the effect of imparting the shutdown function to the separator is not impaired. Examples of fillers usable in the resin porous film (I) include heat-resistant fine particles useable in the later-described heat-resistant porous layer (II).

The particle size of the filler used in the resin porous film (I) is preferably 0.01 μm or more, and more preferably 0.1 μm or more, and preferably 10 μm or less, and more preferably 1 μm or less in average particle size. The average particle size as used herein can be defined as a number-average particle size measured with, for example, a laser diffraction particle size analyzer (e.g., "LA-920" manufactured by HORIBA, Ltd.) by dispersing fine particles of the filler in a medium in which the filler does not dissolve [the same is true for the heat-resistant fine particles of the later-described heat-resistant porous layer (II)].

The resin porous films (I) of the present invention is a laminated film according to claim 1. It is a laminated film having a plurality of layers (e.g., two, three, four, and five layers), and at least two of the plurality of layers are predominantly composed of different resins. For example, if the resin porous film (I) includes two layers, these layers are predominantly composed of different resins. Further, if the resin porous film (I) includes three layers, two out of the three layers are predominantly composed of different resins, and the remainder may be predominantly composed of the same resin as that used as the main component of one of the two layers or may be composed of a different resin from those used in the two layers.

The resin porous film (I) according to claim 1. It is a laminated film is a laminated microporous film that includes layer predominantly composed of one type of the resin (A) and a layer predominantly composed of a resin having a melting point of higher than 150°C; hereinafter referred to as the "resin (B)". More specifically, a laminated microporous film including a layer predominantly composed of PE (hereinafter referred to as the "PE layer") and a layer predominantly composed of polypropylene (PP) (hereinafter referred to as the "PP layer") is preferred. Use of such a laminated film results in the following advantages. That is, even if the layer predominantly composed of the resin (A) melts due to a rise in the temperature in the battery and shutdowns, the layer predominantly composed of the resin (B) maintains the substantial form of the separator, so that the shutdown speed and the post-shutdown resistance of the separator can be further increased, and the shutdown speed and the post-shutdown resistance can be easily adjusted to the values described above.

Further, when the layer predominantly composed of the resin (A) of the resin porous film (I) and the heat-resistant porous layer (II) are directly laminated, the shutdown speed of such a separator may become lower than that of a separator only including a layer predominantly composed of the resin (A) [i.e., a separator composed only of a resin porous film predominantly composed of the resin (A)]. The layer predominantly composed of the resin (B) is disposed between the heat-resistant porous layer (II) and the layer predominantly composed of the resin (A) in the separator of the present invention. This makes it easier to adjust the shutdown speed to the value described above.

The resin porous film (I) includes the layer predominantly composed of the resin (A) and the layer predominantly composed of the resin (B), and the thickness of the layer predominantly composed of the resin (B) is 2 $\mu$m or more, and preferably 4 $\mu$m or more in terms of reducing the impact of the heat-resistant porous layer (II) on the shutdown characteristics of the layer predominantly composed of the resin (A). On the other hand, in terms of holding down an increase in the thickness of the separator as a whole, the thickness of the layer predominantly composed of the resin (B) is preferably 10 $\mu$m or less, and more preferably 7 $\mu$m or less.

Further, when the resin porous film (I) includes the layer predominantly composed of the resin (A) and the layer predominantly composed of the resin (B), the melting point of the resin (B) is preferably 20°C or more, and more preferably 25°C or more higher than that of the resin (A) in terms of enhancing the effects of each layer.

The resin porous film (I) is particularly preferably a three-layer laminated microporous film in which a PE layer is interposed between PP layers. In this case, the speed at which the PE layer collapses and melted PE blocks the pores of the separator increases at the time of shutdown. Thus, it is possible to adjust the shutdown speed to the value described above more easily.

The term "layer predominantly composed of the resin (A)" as used herein refers to a layer in which the volume percentage of the resin (A) is 50 vol% or more (of the total volume (100 vol%) of the constituents of the layer except the pore portions; the same is true in the following). In the layer predominantly composed of the resin (A), the volume percentage of the resin (A) may be 100 vol%. Further, the term "layer predominantly composed of the resin (B)" as used herein refers to a layer in which the volume percentage of the resin (B) is 50 vol% or more (of the total volume (100 vol%) of the constituents of the layer except the pore portions; the same is true in the following). In the layer predominantly composed of the resin (B), the volume percentage of the resin (B) may be 100 vol%.

The term "layer predominantly composed of PE" as used herein refers to a layer in which the volume percentage of PE is 50 vol% or more (of the total volume (100 vol%) of the constituents of the layer except the pore portions; the same is true in the following). In the layer predominantly composed of PE, the volume percentage of PE may be 100 vol%. Further, the term "layer predominantly composed of PP" as used herein refers to a layer in which the volume percentage of PP is 50 vol% or more (of the total volume (100 vol%) of the constituents of the layer except the pore portions; the same is true in the following). In the layer predominantly composed of PP, the volume percentage of PP may be 100 vol%.

For example, in order to make the shutdown effect more easily achievable, the amount of the resin (A) contained in the resin porous film (I) is preferably as follows. That is, the volume of the resin (A) is preferably 10 vol% or more, and more preferably 20 vol% or more of the total volume of the constituents of the separator (i.e., of the total volume (100 vol%) of the constituents except the pore portions). Further, the volume of the resin (A) is preferably 15 vol% or more, and more preferably 20 vol% or more and preferably 80 vol% or less and more preferably 70 vol% or less of the total volume of the constituents of the separator (i.e., of the total volume (100 vol%) of the constituents except the pore portions).

The heat-resistant porous layer (II) of the multilayer porous film that forms the separator of the present invention is a layer that plays a role in providing the separator with heat resistance. For example, even if the temperature of the battery is elevated and the resin porous layer (I) begins to shrink, the hardly-shrinkable heat-resistant porous layer (II) acts as the skeleton of the separator and suppresses thermal shrinkage of the resin porous film (I), in other words, thermal shrinkage of the separator as a whole.

The heat-resistant porous layer (II) contains heat-resistant fine particles and the volume percentage of the heat-resistant fine particles in the heat-resistant porous layer (II) is 50 vol% or more (of the total volume (100 vol%) of the constituents of the layer except the pore portions; however, when the layer includes a porous base (described later), the volume percentage of the heat-resistant fine particles refers to the volume percentage of the heat-resistant fine particles with respect to the total volume (100 vol%) of the constituents of the layer except the porous base; the same is true in the following).

For the heat-resistant fine particles, organic or inorganic fine particles may be used as long as they have a heat-resistant temperature of 150°C or higher and resistant to heat, are electrically insulative, stable electrochemically and against the organic electrolyte included in the battery and against a solvent (described later in detail) used in the production of the separator, and moreover resistant to oxidation reduction in the working voltage range of the battery. However, organic fine particles can be used more preferably in terms of their stability, etc. The term "having a heat-resistant temperature of 150°C or higher" as used herein means that changes in the shape, such as softening, cannot be seen in the material at least at 150°C (except the later-described porous base).

More specifically, examples of inorganic fine particles include fine particles of inorganic oxides such as iron oxide, silica ($SiO_2$), alumina ($Al_2O_3$), $TiO_2$, $BaTiO_3$, and $ZrO_2$; inorganic nitrides such as aluminum nitride and silicon nitride; hardly-soluble ionic crystals such as calcium fluoride, barium fluoride, and barium sulfate; covalent crystals such as silicon and diamond; and clays such as montmorillonite. The inorganic oxides may also include materials derived from mineral resources such as boehmite, zeolite, apatite, kaoline, mullite, spinel, olivine, and mica or artificial products of these materials. Moreover, the inorganic fine particles may be electrically insulative fine particles obtained by covering the surface of a conductive material with an electrically insulative material (e.g., any of the inorganic oxides mentioned above). Examples of the conductive material include: conductive oxides such as metal, $SnO_2$, and indium tin oxide (ITO), and carbonaceous materials such as carbon black and graphite.

Further, examples of organic fine particles (organic powder) include: fine particles of various cross-linked polymers [except those corresponding to the resin (A)] such as cross-linked polymethyl methacrylate, cross-linked polystyrene, cross-linked polydivinylbenzene, cross-linked styrene-divinylbenzene copolymers, polyimide, melamine resins, phenol resins, and benzoguanamine-formaldehyde condensation products; and fine particles of heat-resistant polymers such as PP, polysulfone, polyacrylonitrile, aramid, polyacetal, and thermoplastic polyimide. Further, each of the organic resins (polymers) forming organic fine particles may be a mixture, a modified product, a derivative, a copolymer (a random copolymer, an alternating copolymer, a block copolymer, or a graft copolymer), or a cross-linked product (in the case of the heat-resistant polymer) of the resin materials described above.

For the heat-resistant fine particles, the various fine particles describe above may be used alone or in combination of two or more. It is more preferable to use at least one of alumina, silica and boehmite.

The form of the heat-resistant fine particles may be close to spherical or may be plate-like, for example. However, it is preferable that the heat-resistant fine particles included in the heat-resistant porous layer (II) are at least partially plate-like particles. The heat-resistant fine particles may be entirely plate-like particles. Use of plate-like particles in the heat-resistant porous layer (II) leads to a further improvement in the effect of suppressing a short circuit.

Examples of plate-like heat-resistant fine particles include various commercially-available products, such as "SUNLOVELY (trade name)" ($SiO_2$) manufactured by AGC Si-Tech Co., Ltd., a pulverized product of "NST-B1 (trade name)" ($TiO_2$) manufactured by ISHIHARA SANGYO KAISHA LTD., plate-like barium sulfate "H Series (trade name)" and "HL Series (trade name)" manufactured by Sakai Chemical Industry Co., Ltd., "MICRON WHITE (trade name)" (talc) manufactured by Hayashi Kasei Co., Ltd., "BEN-GEL (trade name)" (bentonite) manufactured by Hayashi Kasei Co., Ltd., "BMM (trade name)" and "BMT (trade name)" (boehmite) manufactured by Kawai Lime Industrial, Co., Ltd., "CELASULE BMT-B (trade name)" [alumina ($Al_2O_3$)] manufactured by Kawai Lime Industrial, Co., Ltd., "SERATH (trade name)" (alumina) manufactured by KINSEI MATEC CO., LTD., and "HIKAWA MICA Z-20 (trade name)" (sericite) manufactured by Hikawa Kogyo Co., Ltd. Other than the above, $SiO_2$, $Al_2O_3$, ZrO and $CeO_2$ can be produced by a method disclosed in JP 2003-206475 A

When the heat-resistant fine particles are in the form of plate-like particles, the aspect ratio (the ratio of the maximum length to the thickness of plate-like particle) is preferably 5 or more, and more preferably 10 or more, and preferably 100 or less, and more preferably 50 or less. Also, the ratio of the long axis length to the short axis length (the long axis length / the short axis length) of the flat plate surface of each heat-resistant fine particle is 3 or less, more preferably 2 or less and is desirably close to 1 in average.

The aspect ratio of each plate-like particle and the average ratio of the long axis length to the short axis length of the flat plate surface can be determined by analyzing scanning electron microscope (SEM) images of the plate-like particles.

When using plate-like particles as the heat-resistant fine particles, the plate-like particles are preferably present in the heat-resistant porous layer (II) in a such manner that the flat plate surface of each particle is substantially parallel to the surface of the separator. More specifically, for the plate-like particles in the vicinity of the surface of the separator, the angle between the flat plate surface and the surface of the separator is preferably 30° or less in average [most preferably the angle is 0° in average, i.e., the flat plate surfaces in the vicinity of the surface of the separator are parallel to the surface of the separator]. The term "in the vicinity of the surface" as used herein refers to about a 10% range of the entire thickness from the surface of the separator. By improving the orientation of the plate-like particles so that the plate-like particles become present in the above-described manner, it is possible to prevent, in a more effective manner, an internal short circuit caused by lithium dendrites deposited on the electrode surface or by an active material protruding through the electrode surface. It is possible to know the state of the plate-like particles present in the heat-resistant porous layer (II) by observing the cross section of the separator with an SEM.

Further, it is preferable that the heat-resistant fine particles included in the heat-resistant porous layer (II) are at least partially fine particles having a secondary particle structure in which agglomerated primary particles form secondary particles. The heat-resistant fine particles may be entirely fine particles having a secondary particle structure. Inclusion of the heat-resistant fine particles having a secondary particle structure in the heat-resistant porous layer (II) can ensure a short circuit prevention effect similar to the one obtained from the plate-like particles as described above. Further, in this case, since adhesion of particles can be prevented to some extent and thus adequate clearance can be maintained between the particles, the ion permeability of the heat-resistant porous layer (II) can be improved with ease. Examples of the heat-resistant fine particles having a secondary particle structure include: boehmite such as "C06 (trade name)" and "C20 (trade name)" manufactured by TAIMEI CHEMICALS CO., LTD.; $CaCO_3$ such as "ED-1 (trade name)" manufactured by KOMESHO SEKKAI KOGYO CO., LTD.; and clays such as "Zeolex 94HP (trade name)" manufactured by J. M. Huber Corporation.

The particle size of the heat-resistant fine particles is preferably 0.01 $\mu$m or more, and more preferably 0.1 $\mu$m or more in average particle size as determined by the above-described method. That is, if the particle size of the heat-resistant particles is too small, the pore size of the heat-resistant porous layer (II) declines. As a result, it may become difficult to adjust the bubble point pore size of the multilayer porous film to the preferred value described above. Further, since the paths running through the pores of the multilayer porous film may become too complex, it becomes difficult to adjust the air permeability of the multilayer porous film to the preferred value described above. On the other hand, if the particle size of the heat-resistant fine particles is too large, the effect of improving the heat resistance of the separator resulting from the formation of the heat-resistant porous layer (II) may decline. Therefore, the average particle size of the heat-resistant fine particles is preferably 15 $\mu$m or less, and more preferably 5 $\mu$m or less.

As for the amount of the heat-resistant fine particles in the heat-resistant porous layer (II), the volume percentage of the heat-resistant fine particles in the heat-resistant porous layer (II) is more preferably 70 vol% or more, and still more preferably 90 vol% or more. By increasing the amount of the heat-resistant fine particles in the heat-resistant porous layer (II) as above, it is possible to suppress, in a more favorable manner, a short circuit caused by direct contact between the positive and negative electrodes when the temperature of the battery is elevated.

To bind the heat-resistant fine particles together or to bind the resin porous film (I) and the heat-resistant porous layer (II) as needed, it is preferable to include an organic binder in the heat-resistant porous layer (II). With this in view, an upper limit to the amount of the heat-resistant fine particles in the heat-resistant porous layer (II) is preferably 99 vol%, in the volume percentage in the heat-resistant porous layer (II). If the amount of the heat-resistant fine particles in the heat-resistant porous layer (II) is less than 50 vol%, the amount of organic binder in the heat-resistant porous layer (II) needs to be increased, for example. In that case, the pores of the heat-resistant porous layer (II) will be easily filled with the organic binder, and the function as a separator may decline, for example. Further, if more pores are formed by using a pore forming agent or the like, clearance between the heat-resistant fine particles will become too large, and the effect of suppressing thermal shrinkage of the separator may decline.

If the amount of the heat-resistant fine particles contained is small, it is preferable to include fine particles of a resin (C) (described later) to ensure the pores of the heat-resistant porous layer (II).

In terms of ensuring the form stability of the separator and combining the heat-resistant porous layer (II) and the resin porous film (I), it is preferable to include an organic binder in the heat-resistant porous layer (II). Examples of organic binders include EVA (those with a vinyl acetate-derived structural content of 20 to 35 mol%), ethylene-acrylic acid copolymers such as an ethylene-ethyl acrylate copolymer, fluororubber, styrene-butadiene rubber (SBR), carboxymethyl cellulose (CMC), hydroxyethyl cellulose (HEC), polyvinyl alcohol (PVA), polyvinyl butyral (PVB), polyvinyl pyrrolidone (PVP), poly-N-vinylacetamide (PNVA), cross-linked acrylic resins, polyurethane, and epoxy resins. In particular, heat-resistant binders having a heat-resistant temperature of 150°C or higher can be used preferably. These organic binders may be used alone or in combination of two or more.

Among the organic binders mentioned above, highly flexible binders such as EVA, ethylene-acrylic acid copolymers, fluororubber, and SBR are preferable. Specific examples of such highly flexible organic binders include: EVA such as "EVAFLEX series" available from DU PONT-MITSUI POLYCHEMICALS CO., LTD. and EVA available from NIPPON UNICAR CO., LTD.; ethylene-acrylic acid copolymers such as "EVAFLEX-EEA series" available from DU PONT-MITSUI POLYCHEMICALS CO., LTD. and EEA available from NIPPON UNICAR CO., LTD; fluororubber such as "DAI-EL LATEX series" available from DAIKIN INDUSTRIES, Ltd.; SBR such as "TRD-2001" available from JSR Corporation and "EM-400B" available from ZEON CORPORATION.

When using any of the above-described organic binders in the heat-resistant porous layer (II), the organic binder may be dissolved in a solvent for the later-described composition for forming the heat-resistant porous layer (II) or used in the form of an emulsion in which the organic binder is dispersed.

Further, to ensure the shape stability and the flexibility of the separator, a fibrous material or fine particles of the resin (C) (described later) may be mixed with the heat-resistant porous layer (II). The fibrous material is not particularly limited as long as it has a heat-resistant temperature of 150°C or higher and is electrically insulative, stable electrochemically and against the electrolyte included in the battery and against a solvent used in the production of the separator. The term "fibrous material" as used herein refers to one having an aspect ratio [longitudinal length / width in the direction perpendicular to the longitudinal direction (diameter)] of 4 or more, and the aspect ratio is preferably 10 or more.

Specific examples of constituents of the fibrous material include: cellulose and its modified products [such as CMC and hydroxypropyl cellulose (HPC)]; polyolefins [such as PP and propylene copolymers]; polyesters [such as polyethylene terephthalate (PET), polyethylene naphthalate (PEN), and polybutylene terephthalate (PBT)]; resins such as polyacrylonitrile (PAN), aramid, polyamideimide, and polyimide; and inorganic oxides such as glass, alumina, zirconia, and silica. Two or more of these constituents may be used in combination to form the fibrous material. The fibrous material also may include a variety of known additives (e.g., an antioxidant, etc. in the case of a resin fibrous material) as needed.

Further, a porous base can be used as the heat-resistant porous layer (II). A porous base is composed of the fibrous material in the form of a sheet such as a woven fabric, a nonwoven fabric (including paper) or the like and has a heat-resistant temperature of 150°C or higher. For example, commercially available nonwoven fabric can be used as the base. In the separator in this form, it is preferable to include the heat-resistant fine particles in the pores of the porous base. Any of the organic binders mentioned above may also be used to bind the porous base and the heat-resistant fine particles to each other.

The term "heat resistance" as used herein in connection with the porous base means that the size of the porous base does not substantially change by softening or the like, and the heat resistance of the porous base is evaluated based on whether the highest temperature (heat-resistant temperature) at which changes in the length of the subject, i.e., the shrinkage (shrinkage rate) of the porous base can be kept within 5% of the length of the porous base at ambient temperature is sufficiently higher than the shutdown temperature. To improve the post-shutdown safety of the battery, it is desirable that the porous base has a heat-resistant temperature 20°C or higher than the shutdown temperature. More specifically, the heat-resistant temperature of the porous base is preferably 150°C or higher, and more preferably 180°C or higher.

The diameter of the fibrous material (including the fibrous material forming the porous base as well as other fibrous materials) is not limited as long as it is equal to or smaller than the thickness of the porous layer (II) but is preferably, for example, 0.01 to 5 $\mu$m. If the diameter is too large, entanglement of the fibrous material becomes insufficient. Thus, when the fibrous material whose diameter is too large is used to form a sheet and the sheet is used as the porous base, for example, the strength declines, and the porous base becomes difficult to handle. Further, if the diameter is too small, the pores of the separator become too small, and the ion permeability tends to decline, and the effects of suppressing deterioration of the battery characteristics, such as load characteristics, may be impaired.

As for the amount of the fibrous material contained in the separator, the volume percentage of the fibrous material in the separator is preferably 10 vol% or more, and more preferably 20 vol% or more, and preferably 90 vol% or less and more preferably 80 vol% or less (of the total volume (100 vol%) of the constituents of the separator except the pore portions). As for the state of the fibrous material in the separator, the angle between the long axis (the axis in the longitudinal direction) of the fibrous material and the surface of the separator is preferably 30° or less, and more preferably 20° or less in average.

Further, when using the fibrous material as the porous base, it is desirable to adjust the amount of other components contained in the heat-resistant porous layer (II) such that the volume percentage of the porous base in the heat-resistant porous layer (II) becomes 10 vol% or more and 90 vol% or less [of the total volume (100 vol%) of the constituents of the heat-resistant porous layer (II) except the pore portions].

The resin (C) is not particularly limited as long as it is stable electrochemically and against the organic electrolyte included in the battery, and is different from the materials from which the heat-resistant fine particles can be formed, but is desirably highly flexible. More specifically, examples of the resin (C) include polyolefins such as PE, copolymerized polyolefins, polyolefin derivatives (e.g., chlorinated polyethylene), polyolefin wax, oil wax, and carnauba wax. Examples of copolymerized polyolefins include ethylene-vinylmonomer copolymers, more specifically, ethylene-propylene copolymers, EVA, and ethylene-acrylic acid copolymers (e.g., ethylene-methylacrylate copolymer and ethylene-ethylacrylate copolymer). Further, ionomer resin, silicon rubber, polyurethane and the like also can be used. Furthermore, it is also possible to use various cross-linked polymers (except those corresponding to the above-described materials from which the heat-resistant fine particles can be made) such as cross-linked methyl polymethacrylate, cross-linked polystyrene, cross-linked polydiviniylbenzene, and sylene-divinylbenzen copolymer cross-linked products.

The particle size of fine particles of the resin (C) is preferably 0.1 to 20 $\mu$m in average particle size as determined by the same method as that used to determine the average particle size of the heat-resistant fine particles. Further, when using fine particles of the resin (C), the volume percentage of fine particles of the resin (C) in the heat-resistant porous layer (II) is preferably 10 to 30 vol% [of the total volume (100 vol%) of the components of the heat-resistant porous layer (II) except the pore portions].

In terms of improving the effect of preventing a short circuit in the battery and ensuring the strength of the separator to improve its ease of handling, the thickness of the separator is preferably 6 $\mu$m or more, and more preferably 13 $\mu$m or more. On the other hand, in terms of further improving the energy density of the battery, the thickness of the separator is preferably 45 $\mu$m or less, and more preferably 20 $\mu$m or less.

Further, the thickness of the resin porous film (I) is preferably 5 $\mu$m or more, and more preferably 10 $\mu$m or more, and preferably 40 $\mu$m or less, more preferably 30 $\mu$m or less, and particularly preferably 20 $\mu$m or less. The thickness of the heat-resistant porous layer (II) is preferably 1 $\mu$m or more, and more preferably 3 $\mu$m or more, and preferably 15 $\mu$m or less, more preferably 10 $\mu$m or less, and particularly preferably 6 $\mu$m or less. Further, the ratio between a and b (a/b), where a is the thickness of the resin porous film (I) and b is the thickness of the heat-resistant porous layer (II), is preferably 0.5 or more, and preferably 10 or less. If the ratio between a and b is too small, the percentage of the resin porous film (I) in the separator becomes too small and this may impair the fundamental function of the separator or may lead to the deterioration of the shutdown characteristics. Further, if the ratio between a and b is too large, the percentage of the heat-resistant porous layer (II) in the separator becomes too small and this may impair the effect of improving the heat resistance of the separator as a whole.

It is desirable that the separator has strength of 50 g or more, the strength being a piercing strength obtained using a needle having a diameter of 1 mm. If the piercing strength is too small, the following problem may arise. That is, when lithium dendrites are formed, they may penetrate through the separator and cause a short circuit. If the separator is configured as above, it is possible to ensure the above piercing strength.

Further, the thermal shrinkage rate of the separator of the present invention is preferably 5% or less at 150°C. The separator with such a characteristic hardly shrinks even if the temperature in the battery reaches about 150°C. Thus, a short circuit resulting from contact between the positive and negative electrodes can be prevented with certainty, and the safety of the battery under high temperature conditions can be further improved. By adopting the configuration described above for the separator, it is possible to ensure the above thermal shrinkage rate.

"The thermal shrinkage rate at 150°C" is a decrease in the size of the separator expressed as a percent, which is determined through the steps of placing the separator in a thermostatic oven, letting the separator stand for 3 hours in the thermostatic oven whose temperature is raised to 150°C, and taking out the separator from the thermostatic oven to compare the size of the heated separator to the size of the separator before the heating.

to produce a separator, the following method (a) or (b) can be adopted. In the production method (a), a composition (liquid composition such as slurry) for forming the heat-resistant porous layer (II) containing the heat-resistant fine particles is applied to a porous base, and the porous base and the resin porous film (I) are stacked together and dried to form a single separator.

Specific examples of the porous base in the above case include porous sheets such as fabrics of at least one of the fibrous materials that contain any of the materials mentioned above as a constituent and unwoven fabrics having a structure in which the fibrous materials are intertwined with each other. More specifically, any of nonwoven fabrics such as paper, PP nonwoven fabric, polyester nonwoven fabric (e.g., PET nonwoven fabric, PEN nonwoven fabric, and PBT nonwoven fabric), and PAN nonwoven fabric can be used as the porous base.

In addition to the heat-resistant fine particles, the composition for forming the heat-resistant porous layer (II) contains, for example, fine particles of the resin (C) or the like, and an organic binder, and the composition is obtained by dispersing these components into a solvent (including a dispersion medium, which is true in the following). The organic binder also can be dissolved in the solvent. For the composition for forming the heat-resistant porous layer (II), it is possible to use any solvent in which the heat-resistant fine particles, fine particles of the resin (C) and the like can be dispersed uniformly and the organic binder can be dissolved or dispersed uniformly. Generally, organic solvents including aromatic hydrocarbons such as toluene, furans such as tetrahydrofuran, and ketones such as methyl ethyl ketone and methyl isobutyl ketone are used preferably. To these solvents, alcohols (such as ethylene glycol and propylene glycol) or a variety of propylene oxide glycol ethers such as monomethyl acetate may be added as appropriate for the purpose of controlling the surface tension. Further, when the organic binder is water-soluble or when using the organic binder in the form of an emulsion, water may be used as the solvent. Also in this case, alcohols (such as methyl alcohol, ethyl alcohol, isopropyl alcohol, and ethylene glycol) and a variety of surfactants such as silicone, fluorochemical and polyether surfactants can be added to the solvent as appropriate to control the surface tension.

The solid content of the composition for forming the heat-resistant porous layer (II) including the heat-resistant fine particles, the organic binder, and, as needed, fine particles of the resin (C) is preferably, for example, 10 to 80 mass%.

When the pores of the porous base has a relatively large pore size, for example, 5 $\mu$m or more, this tends to become a cause of a short circuit in the battery. Thus, in such a case, the porous base preferably has a structure in which the heat-resistant fine particles, fine particles of the resin (C) and the like are partially or entirely present in cavities in the porous base. In order to make the heat-resistant fine particles, fine particles of the resin (C) and the like present in cavities in the porous base, the following steps may be used, for example: applying the composition for forming the heat-resistant porous layer (II) containing these components to the porous base; removing an extra composition through a set gap, and drying the applied composition.

When using plate-like particles as the heat-resistant fine particles, to improve the orientation of the plate-like particles contained in the separator to exploit the actions of the plate-like particles more effectively, the composition for forming the heat-resistant porous layer (II) containing the plate-like particles may be applied to the porous base to impregnate the porous base with the composition, and a shear force or magnetic field may be applied to the composition. For example, it is possible to apply a shear force to the composition for forming the heat-resistant porous layer (II) containing the plate-like particles by applying the composition to the porous base through a set gap as described above.

In order to exploit the effects of the respective components, such as the heat-resistant fine particles including the plate-like particles and fine particles of the resin (C), more effectively, these components may be distributed unevenly such that they are gathered in layers in parallel with or substantially parallel with the film surface of the separator.

In the production method (b), the separator is produced by additionally including a fibrous material in the composition for forming the heat-resistant porous layer (II) as needed, applying the composition to the surface of the resin porous film (I), and drying the applied composition at a certain temperature. When a hydrophobic film such as a polyolefin film is used as the resin porous film (I) and water or the like is used as the medium of the composition for forming the heat-resistant porous layer (II) in the production of the separator by the production method (b), it is desirable to subject the surface of the resin porous film (I) to a surface treatment such as a corona treatment or plasma treatment to improve the wettability of the surface of the resin porous film (I) prior to applying the composition for forming the heat-resistant porous layer (II). Further, as described above, the composition for forming the heat-resistant porous layer (II) may be applied to the surface of the resin porous film (I) after adjusting the surface tension of the composition as appropriate.

The composition for forming the heat-resistant porous layer (II) can be applied by a variety of known methods such as a gravure coater, a die coater, a dip coater and a spray coater.

A battery to which the separator of the present invention can be applied, i.e., the battery of the present invention is not particularly limited as long as it is a secondary battery using an organic electrolyte, and can be in the form of any of secondary batteries having various components and structures.

As one example, hereinafter, the application to a lithium secondary battery will be described in detail. The lithium secondary battery may be in the form of a cylindrical (e.g., rectangular cylindrical or circular cylindrical) battery using a steel can, an aluminum can or the like as an outer case can, or a soft package battery using a metal-evaporated laminated film as an outer package.

There is no particular limitation to the positive electrode as long as one used in conventionally-known lithium secondary batteries, i.e., one containing an active material capable of intercalating and deintercalating Li ions is used. Examples of active materials include: lithium-containing transition metal oxides having a layered structure and represented by $Li_{1+x}MO_2$ (where - 0.1 < x < 0.1, and M is Co, Ni, Mn, Al, Mg, etc.); lithium manganese oxides having a spinel structure and represented by $LiMn_2O_4$ or other formulas in which the elements of $LiMn_2O_4$ are partially replaced with other elements; and olivine-type compounds represented by $LiMPO_4$ (where M is Co, Ni, Mn, Fe, etc.). Specific examples of the lithium-containing transition metal oxides having a layered structure include $LiCoO_2$ and $LiNi_{1-x}Co_{x-y}Al_yO_2$ (where $0.1 \leq x \leq 0.3$ and $0.01 \leq y \leq 0.2$) as well as oxides including at least Co, Ni and Mn ($LiMn_{1/3}Ni_{1/3}Co_{1/3}O_2$, $LiMn_{5/12}Co_{1/6}O_2$, $LiNi_{3/5}Co_{1/5}O_2$, etc.).

Carbon materials such as carbon black can be used as a conductive assistant, and fluororesins such as polyvinylidene fluoride (PVDF) can be used as a binder. A positive electrode mixture in which these materials and an active material are mixed is used to form a positive electrode mixture layer on, for example, the surface of a current collector.

For the positive electrode current collector, a metal foil, a punched metal, a metal mesh, or an expanded metal made of aluminum or the like may be used, for example. Generally, an aluminum foil with a thickness of 10 to 30 $\mu$m is suitably used.

Generally, a positive electrode lead portion is provided in the following manner. At the time of the production of the positive electrode, the positive electrode mixture layer is not formed on a part of the current collector to leave it exposed, and this exposed portion serves as the lead portion. It is to be noted that there is no need for the lead portion to be integral with the current collector from the beginning, and may be provided by connecting an aluminum foil or the like to the current collector afterwards.

There is no particular limitation to the negative electrode as long as one used in conventionally-known lithium secondary batteries, i.e., one containing an active material capable of intercalating and deintercalating Li ions is used.

Examples of active materials include carbon materials capable of intercalating and deintercalating lithium, such as graphite, pyrolytic carbons, cokes, glassy carbons, calcined organic polymer compounds, mesocarbon microbeads (MCMB), and carbon fibers, and these carbon materials may be used alone or in combination or two or more. Further, it is also possible to use elements such as Si, Sn, Ge, Bi, Sb and In and alloys of these elements, compounds that can be charged/discharged at a low voltage close to lithium metal, such as lithium-containing nitrides and oxides such as $Li_4Ti_5O_{12}$, lithium metal and lithium/aluminum alloy also can be used as a negative electrode active material. As the negative electrode, it is possible to use a compact (negative electrode mixture layer) produced by applying, to a current collector as a core material, a negative electrode mixture prepared by adding a conductive assistant (e.g., a carbon material such as carbon black), a binder such as PVDF and the like to the negative active material as appropriate, or a foil made of any of the various alloys and lithium metals described above alone or being laminated to the surface of the current collector.

When using a current collector in the negative electrode, a metal foil, a punched metal, a metal mesh, an expanded metal or the like made of copper, nickel, or the like can be used as the current collector. Generally, a copper foil is used. When reducing the thickness of the negative electrode as a whole to increase the energy density of the battery, an upper limit to the thickness of the negative electrode current collector is preferably 30 μm, and a lower limit to the thickness is desirably 5 μm. A negative electrode lead portion may be formed in the same manner as the positive electrode lead portion.

The positive electrode and the negative electrode described above may be laminated through the separator of the present invention and are used in the form of a laminate or a wound electrode body obtained by further winding the laminate in a spiral fashion.

When a material having good resistance to oxidation (e.g., inorganic oxide) is used as the heat-resistant fine particles used in the heat-resistant porous layer (II), it is possible to prevent the oxidation of the separator caused by the positive electrode by arranging the heat-resistant porous layer (II) to oppose the positive electrode. Consequently, the high-temperature storability and the charge-discharge cycle characteristics of the battery can be improved. For this reason, it is preferable that the battery of the present invention is configured such that the heat-resistant porous layer (II) of the separator opposes the positive electrode.

As the organic electrolyte, a solution prepared by dissolving lithium salt in an organic solvent is used. The lithium salt is not particularly limited as long as $Li^+$ ions can be dissociated from it in the solvent and it is less likely to cause a side reaction such as decomposition in the working voltage range of the battery. For example, it is possible to use any of the following: inorganic lithium salts such as $LiClO_4$, $LiPF_6$, $LiBF_4$, $LaAsF_6$, and $LiSbF_6$; and organic lithium salts such as $LiCF_3SO_3$, $LiCF_3CO_2$, $Li_2C_2F_4(SO_3)_2$, $LiN(CF_3SO_2)_2$, $LiC(CF_3SO_2)_3$, $LiC_nF_{2n+1}SO_3$ (n ≥ 2), and $LiN(R_fOSO_2)_2$ (where $R_f$ is a fluoroalkyl group).

The organic solvent used in the organic electrolyte is not particularly limited as long as it dissolves the lithium salt and does not cause a side reaction such as decomposition in the working voltage range of the battery. Examples of the organic solvent include: cyclic carbonates such as ethylene carbonate, propylene carbonate, butylene carbonate, and vinylene carbonate; chain carbonates such as dimethyl carbonate, diethyl carbonate, and methyl ethyl carbonate; chain esters such as methyl propionate; cyclic esters such as γ-butyrolactone; chain ethers such as dimethoxyethane, diethyl ether, 1,3-dioxolane, diglyme, triglyme, and tetraglyme; cyclic ethers such as dioxane, tetrahydrofuran, and 2-methyltetrahydrofuran; nitriles such as acetonitrile, propionitrile, and methoxypropionitrile; and sulfurous esters such as ethylene glycol sulfite. These organic solvents may be used in combination of two or more. To further improve the characteristics of the battery, it is desirable to use organic solvents in combination that lead to high conductivity, such as a mixed solvent of ethylene carbonate and chain carbonate. Further, for the purpose of improving the characteristics of the battery, such as safety, charge-discharge cycle characteristics, and high-temperature storability, additives such as vinylene carbonates, 1,3-propane sultone, diphenyl disulfide, cyclohexylbenzene, biphenyl, fluorobenzene, and t-butylbenzene can be added to the electrolyte as appropriate.

The concentration of the lithium salt in the organic electrolyte is preferably 0.5 to 1.5 mol/L and more preferably 0.9 to 1.25 mol/L.

The positive electrode including a positive electrode mixture layer and the negative electrode including a negative electrode mixture layer as described above can be produced by dissolving a positive electrode mixture / a negative electrode mixture in a solvent such as N-methyl-2-pyrrolidone (NMP) to prepare a positive electrode mixture layer forming composition (e.g., slurry) / a negative electrode active material layer forming composition (e.g., slurry), applying the composition to the surface of a current collector, and drying the applied composition.

Examples

Hereinafter, the present invention will be described in detail by way of Examples. Note that the present invention is not limited to the following Examples.

In each of Examples, the melting point of the resin (A) constituting the resin porous film (I) is a melting temperature measured in accordance with JIS K 7121 with a differential scanning calorimeter (DSC), and the porosity of the resin porous film (I) and that of the heat-resistant porous layer (II) were determined by the method described above. Further, the physical properties of each separator were measured by the following methods.

<Thermal Shrinkage Rate>

Each test piece cut into 4 cm × 4 cm from each separator was interposed between two stainless steel plates fixed with a clip, and placed in a thermostatic oven set at 150°C for 30 minutes. Then, the test piece was taken out from the thermostatic oven and the length of the test piece was measured. The length of the test piece after the test was compared to the length before the test, and the decrease in the length expressed as a percentage was taken as the thermal shrinkage rate.

<Shutdown Temperature, Shutdown Speed, and Post-Shutdown Resistance>

Each separator was cut into a piece of 25 mm in diameter. The piece was interposed between stainless steel plates of 16 mm in diameter, and they were placed in a cell. An electrolyte (a solution obtained by dissolving $LiPF_6$ at a concentration of 1.0 mol/L in a mixed solvent of ethylene carbonate and methyl ethyl carbonate at a volume ratio of 1:2) was further injected into the cell, and the cell was hermetically sealed. Then, the cell was placed in a thermostatic oven, the temperature of the thermostatic oven was raised to 150°C at a rate of 1°C/min, and the resistance of the separator at 1 KHz was measured using a "3560-type milliohm high tester" manufactured by HIOKI E.E. CORPORATION. Further, a thermocouple was placed on the surface of the cell to read the temperature of the cell surface at the same time. In these measurements, the temperature at which the resistance reached 40 Ω was taken as the shutdown temperature. Further, from a change in the resistance from 10 Ω before the shutdown temperature and 10 Ω after the shutdown temperature in total of 20 Ω, the shutdown speed was calculated using the formula (1).

After the shutdown, the resistance of the separator was kept measured to determine the highest reaching resistance, and the post-shutdown resistance of the separator was determined from the formula (2). The resistance higher than 3 kΩ could not be measured due to the specifications of the device. Thus, the resistance higher than 3 kΩ was taken as "> 3 kΩ" (because the stainless steel plates used in the measurements each had an area of about 2 $cm^2$, the resistance found to be higher than 3 KΩ as a result of the measurement is described as ">1.5 kΩ/$cm^2$" in each of the following Examples).

Example 1

1000g of plate-like boehmite (average particle size: 1 μm, aspect ratio: 10) as heat-resistant fine particles was dispersed in 1000g of water. Further, 120g of SBR latex (solid content: 40 mass%) as an organic binder was added to the dispersion and was dispersed uniformly, thus preparing a composition for forming the heat-resistant porous layer (II).

As the resin porous film (I), a three-layer microporous film in which PP layers and a PE layer were laminated in the order of PP, PE, and PP layers (total thickness: 16 μm, thickness of each layer; PP layer: 5 μm, PE layer: 6 μm, and PP layer: 5μm, porosity: 39%, melting point of PE:134°C and melting point of PP: 163°C) was prepared. The composition for forming the heat-resistant porous layer (II) was applied to one side of the resin porous film (I) with a blade coater and then was dried to form the heat-resistant porous layer (II) predominantly composed of plate-like boehmite as the heat-resistant fine particles and having 5 μm in thickness, thus producing a separator. The porosity of the heat-resistant porous layer (II) and the volume percentage of the heat-resistant fine particles in the heat-resistant porous layer (II) were calculated given that the density of the organic binder was 1.2 g/$cm^3$ and the density of the boehmite was 3 g/$cm^3$, an they were 53% and 89% (89 vol%), respectively.

Further, the thermal shrinkage rate of the separator was 5%, the shutdown temperature was 131°C, and the shutdown speed was 79 Ω/min·$cm^2$. Further, the post-shutdown resistance was > 1.5 kΩ$cm^2$.

Example 2

A separator was produced in the same manner as in Example 1 except that boehmite in the form of secondary particles (average particle size: 0.6 μm) was used as heat-resistant fine particles. In this separator, the porosity of the heat-resistant porous layer (II) was 59%, and the volume percentage of the heat-resistant fine particles in the heat-resistant porous layer (II) was 89%. Further, in this separator, the thermal shrinkage rate was 3%. The shutdown temperature, the shutdown speed, and the post-shutdown resistance were substantially the same as those in Example 1.

Example 3

A separator was produced in the same manner as in Example 1 except that granular alumina (average particle size: 0.4 $\mu$m) was used as heat-resistant fine particles. In this separator, the porosity of the heat-resistant porous layer (II) was 50%, and the volume percentage of the heat-resistant fine particles in the heat-resistant porous layer (II) was 86%. Further, in this separator, the thermal shrinkage rate was 7%. The shutdown temperature, the shutdown speed, and the post-shutdown resistance were substantially the same as those in Example 1.

Comparative Example 1

A separator was produced in the same manner as in Example 1 except that a PE microporous film (thickness: 16 $\mu$m, porosity: 39%, melting point of PE: 137°C) was used as the resin porous film (I). In this separator, the thermal shrinkage rate was 5%, the shutdown temperature was 134°C, and the shutdown speed was 9.2 $\Omega$/min·cm$^2$. Further, the post-shutdown resistance was 139 $\Omega$/cm$^2$.

Comparative Example 2

The resin porous film (I) used in Example 1 was used as a separator without forming the heat-resistant porous layer (II). In this separator, the thermal shrinkage rate was 49%, the shutdown temperature was 130°C, the shutdown speed was 79 $\Omega$/min$\alpha$·cm$^2$, and the post-shutdown resistance was > 1.5 k$\Omega$/cm$^2$.

Production Example 1 (Production of Negative Electrode)

95 parts by mass of graphite as a negative electrode active material and 5 parts by mass of PVDF as a binder were mixed uniformly in NMP as a solvent, thus preparing a negative electrode mixture-containing paste. The negative electrode mixture-containing paste was applied intermittently onto both sides of a 10 $\mu$m-thick copper foil as a current collector such that the application length was 790 mm on the front side and 810 mm on the backside, which then was dried and calendered to adjust the total thickness of the negative electrode mixture layers to 80 $\mu$m. Subsequently, this current collector was cut such that it would be 56 mm in width, thus producing a negative electrode having 920 mm in length and 56 mm in width. Further, a tab was welded to an exposed portion of the copper foil of the negative electrode to form a lead portion.

Production Example 2 (Production of Positive Electrode)

85 parts by mass of LiNi$_{0.6}$Co$_{0.2}$Mn$_{0.2}$O$_2$ as a positive electrode active material, 10 parts by mass of acetylene black as a conductive assistant, and 5 parts by mass of PVDF as a binder were mixed uniformly in NMP as a solvent, thus preparing a positive electrode mixture-containing paste. This paste was applied intermittently onto both sides of a 20 $\mu$m-thick aluminum foil as a current collector such that the application length was 795 mm on the front side and 805 mm on the backside, which then was dried and calendered to adjust the total thickness of the positive electrode mixture layers to 95 $\mu$m. Subsequently, this current collector was cut such that it would be 54 mm in width, thus producing a positive electrode having 910 mm in length and 54 mm in width. Further, a tab was welded to an exposed portion of the aluminum foil of the positive electrode to form a lead portion.

Example 4

The separator of Example 1 was interposed between the negative electrode produced in Production Example 1 and the positive electrode produced in Production Example 2, such that the heat-resistant porous layer (II) faced the positive electrode, and they were wound in a spiral fashion to produce a wound electrode body. The wound electrode body was placed in a cylindrical steel outer can having 18 mm in diameter and 650 mm in length. An organic electrolyte (a solution obtained by dissolving LiPF$_6$ at a concentration of 1.2 mol/L in a mixed solvent of ethylene carbonate and methyl ethyl carbonate at a volume ratio of 1 to 2) was injected into the outer can, and the outer can was sealed, thus producing a lithium secondary battery.

Examples 5 to 6, Comparative Examples 3 to 4

Lithium secondary batteries were produced in the same manner as in Example 4 except that the separators of Examples 2 to 3 and Comparative Examples 1 to 2 were used in place of the separator of Example 1.
The lithium secondary batteries of Examples 4 to 6 and Comparative Examples 3 to 4 were charged/discharged under the following conditions to measure their charge and discharge capacities to evaluate their battery characteristics (charge characteristic).

Each battery was charged at a constant current of 0.2C until the battery voltage reached 4.2 V, and then was charged at a constant voltage of 4.2 V. The total charging time until the end of charging was 15 hours. Next, each charged battery was discharged at a current of 0.2C until the battery voltage dropped to 3.0V, and the charge-discharge characteristics were evaluated. It was found that all of the batteries could be charged and discharged successfully.

Further, as an overcharging test, the lithium secondary batteries of Examples 4 to 6 and Comparative Examples 3 to 4 charged under the same conditions as above were charged continuously at 20V and 1C for 1 hour.

Furthermore, on the lithium secondary batteries of Examples 4 to 6 and Comparative Examples 3 to 4 charged under the same conditions as above, a temperature-rise test was carried out as follows. Each charged battery was placed in a thermostatic oven, and was heated by raising the temperature of the thermostatic oven from 30°C to 150°C at a rate of 1°C/min. After reaching 150°C, the temperature was maintained at the same level for 30 minutes more, and then the surface temperature of each battery was measured.

Table 1 shows the results of each evaluation performed on the lithium secondary batteries of Examples 4 to 6 and Comparative Examples 3 to 4.

[Table 1]

| | Separator used | Overcharging test | Temperature-rise test |
|---|---|---|---|
| Ex. 4 | Ex. 1 | No abnormality | No abnormality |
| Ex. 5 | Ex. 2 | No abnormality | No abnormality |
| Ex. 6 | Ex. 3 | No abnormality | No abnormality |
| Comp. Ex. 3 | Comp. Ex. 1 | Abrupt drop in voltage and rise in temperature | No abnormality |
| Comp. Ex. 4 | Comp. Ex. 2 | No abnormality | Rise in temperature, |

As can be seen from Table 1, there was no difference between the battery of Comparative Example 1 and the batteries of Examples 4 to 6 on the temperature-rise test. However, on the overcharging test, an abrupt drop in voltage and rise in temperature occurred in the battery of Comparative Example 1 before the test time reached 1 hour. On the other hand, there was no difference between the battery of Comparative Example 2 and the batteries of Examples 4 to 6 on the overcharging test. However, on the temperature-rise test, a rise in temperature was seen in the battery of Comparative Example 2. These results revealed that the batteries of Examples 4 to 6 had an excellent level of safety.

Industrial Applicability

The battery of the present invention can be used in a variety of applications in which conventionally-known batteries are used, such as power sources for a variety of electronic devices.

**Claims**

1. A battery separator comprising a multilayer porous film comprising at least a resin porous film (I) and a heat-resistant porous layer (II) containing heat-resistant fine particles, the heat-resistant fine particles accounting for 50 vol% or more of the heat-resistant porous layed (II),
wherein the resin porous film (I) is a laminated microporous film including a layer predominantly composed of a resin (A) having a melting point of 80°C to 150°C and a layer predominantly composed of a resin (B) having a melting point of higher than 150°C, and the layer predominantly composed of a resin having a melting point of higher than 150°C is disposed between the heat-resistant porous layer (II) and the layer predominantly composed of a resin having a melting point of 80°C to 150°C,
the layer predominantly composed of a resin having a melting point of higher than 150°C has a thickness of 2 $\mu$m or more, and
the battery separator shuts down at a temperature of 100 to 150°C and at a speed of 50 $\Omega$/min·cm$^2$ or higher.

2. The battery separator according to claim 1, wherein a highest-reaching post-shutdown resistance of the battery separator per unit area is 500 $\Omega/cm^2$ or higher the heat-resistant porous layer (II) contains an organic binder, and the heat-resistant fine particles account for 70 vol% or more and 99 vol% or less of the heat-resistant porous layer (II).

3. The battery separator according to claim 1 or 2, wherein the resin porous film (I) is a three-layer laminated microporous film including two layers composed of polypropylene and a layer composed of polyethylene and interposed between the two layers composed of polypropylene.

4. The battery separator according to any one of claims 1 to 3, wherein the layer predominantly composed of the resin having a melting point of higher than 150°C has a thickness of 10 $\mu$m or less.

5. The battery separator according to claim 1 or 2, where resin (A) of the resin porous film (I) comprises polyethylene alone or as a main component.

6. The battery separator according to any one of claims 1 to 5, wherein the heat-resistant fine particles included in the heat-resistant porous layer (II) are fine particles of at least one selected from the group consisting of alumina, silica and boehmite.

7. The battery separator according to any one of claims 1 to 6, wherein at least a portion of the heat-resistant fine particles included in the heat-resistant porous layer (II) comprises plate-like particles.

8. The battery separator according to any one of claims 1 to 7, wherein at least a portion of the heat-resistant fine particles included in the heat-resistant porous layer (II) comprises fine particles having a structure of secondary particles formed by the agglomeration of primary particles.

9. The battery separator according to any one of claims 1 to 8, wherein the porosity A of the resin porous layer (I) and the porosity B of the heat-resistant porous layer (II) satisfy the relationship A≤B.

10. The battery separator according to any one of claims 1 to 9, wherein the resin porous layer (I) has a thickness of 5 $\mu$m to 30 $\mu$m.

11. The battery separator according to any one of claims 1 to 10, wherein the heat-resistant porous layer (II) has a thickness of 1 $\mu$m to 10 $\mu$m.

12. A battery comprising a positive electrode having an active material capable of intercalating and deintercalating an Li ion, a negative electrode having an active material capable of intercalating and deintercalating an Li ion, an organic electrolyte and the battery separator according to any one of claims 1 to 11.

**Patentansprüche**

1. Batterieseparator, umfassend einen porösen Mehrschichtfilm, umfassend wenigstens einen porösen Harzfilm (I) und eine wärmebeständige poröse Schicht (II) mit wärmebeständigem Feinstaub, wobei der wärmebeständige Feinstaub wenigstens 50 Vol.-% der wärmebeständigen Schicht (II) ausmacht, wobei die poröse Harzschicht (I) ein laminierter mikroporöser Film ist, einschließlich einer hauptsächlich aus einem Harz (A) mit einem Schmelzpunkt von 80 °C bis 150 °C bestehenden Schicht sowie einer hauptsächlich aus einem Harz (B) mit einem Schmelzpunkt über 150 °C bestehenden Schicht, und wobei die hauptsächlich aus einem Harz mit einem Schmelzpunkt über 150 °C bestehende Schicht zwischen der wärmebeständigen porösen Schicht (II) und der hauptsächlich aus einem Harz mit einem Schmelzpunkt von 80 °C bis 150 °C bestehenden Schicht angeordnet ist, wobei die hauptsächlich aus einem Harz mit einem Schmelzpunkt über 150 °C bestehende Schicht eine Dicke von wenigstens 2 $\mu$m aufweist, und wobei der Batterieseparator bei einer Temperatur von 100 bis 150 °C und mit einer Geschwindigkeit von wenigstens 50 $\Omega/min.cm^2$ abschaltet.

2. Batterieseparator nach Anspruch 1, wobei ein höchster Widerstand nach dem Abschaltvorgang des Batterieseparators pro Flächeneinheit wenigstens 500 $\Omega/cm^2$ beträgt, wobei die wärmebeständige poröse Schicht (II) einen organischen Binder umfasst und wobei der wärmebeständige Feinstaub wenigstens 70 Vol.-% und höchstens 99 Vol.-% der wärmebeständigen Schicht (II) ausmacht.

3. Batterieseparator nach Anspruch 1 oder 2, wobei die poröse Harzschicht (I) ein dreischichtiger laminierter mikroporöser Film mit zwei aus Polypropylen zusammengesetzten Schichten und einer aus Polyethylen zusammengesetzten und zwischen den zwei aus Polypropylen zusammengesetzten Schichten angeordneten Schicht ist.

4. Batterieseparator nach einem der Ansprüche 1 bis 3, wobei die hauptsächlich aus dem Harz mit einem Schmelzpunkt über 150 °C bestehende Schicht eine Dicke von höchstens 10 μm aufweist.

5. Batterieseparator nach Anspruch 1 oder 2, wobei Harz (A) aus dem porösen Harzfilm (I) Polyethylen allein oder als Hauptbestandteil umfasst.

6. Batterieseparator nach einem der Ansprüche 1 bis 5, wobei der in der wärmebeständigen porösen Schicht (II) enthaltene wärmebeständige Feinstaub Feinstaub aus wenigstens einem Material, ausgewählt aus der folgenden Gruppe ist: Aluminiumoxid, Kieselerde und Böhmit.

7. Batterieseparator nach einem der Ansprüche 1 bis 6, wobei wenigstens ein Teil des in der wärmebeständigen porösen Schicht (II) enthaltenen wärmebeständigen Feinstaubs plattenähnliche Partikel umfasst.

8. Batterieseparator nach einem der Ansprüche 1 bis 7, wobei wenigstens ein Teil des in der wärmebeständigen porösen Schicht (II) enthaltenen Feinstaubs Feinstaub mit einer Struktur von sekundären Partikeln umfasst, die durch die Agglomeration von primären Partikeln gebildet ist.

9. Batterieseparator nach einem der Ansprüche 1 bis 8, wobei die Porosität A der porösen Harzschicht (I) und die Porosität B der wärmebeständigen porösen Schicht (II) die Ungleichung A≤B erfüllen.

10. Batterieseparator nach einem der Ansprüche 1 bis 9, wobei die poröse Harzschicht (I) eine Dicke von 5 μm bis 30 μm aufweist.

11. Batterieseparator nach einem der Ansprüche 1 bis 10, wobei die wärmebeständige poröse Schicht (II) eine Dicke von 1 μm bis 10 μm aufweist.

12. Batterieseparator, umfassend eine positive Elektrode mit einem aktiven Material, das in der Lage ist, ein Li-Ion zu interkalieren und zu deinterkalieren, eine negative Elektrode mit einem aktiven Material, das in der Lage ist, ein Li-Ion zu interkalieren und zu deinterkalieren, ein organisches Elektrolyt und den Batterieseparator nach einem der Ansprüche 1 bis 11.

**Revendications**

1. Séparateur de batterie comprenant un film poreux à couches multiples comprenant au moins un film poreux de résine (I) et une couche poreuse résistante à la chaleur (II) contenant des particules fines résistantes à la chaleur, les particules fines résistantes à la chaleur constituant 50 % en volume ou plus de la couche poreuse résistante à la chaleur (H),
dans lequel le film poreux de résine (I) est un film microporeux stratifié incluant une couche principalement composée d'une résine (A) possédant un point de fusion de 80°C à 150°C et une couche principalement composée d'une résine (B) possédant un point de fusion supérieur à 150°C, et la couche principalement composée d'une résine possédant un point de fusion supérieur à 150°C est disposée entre la couche poreuse résistante à la chaleur (II) et la couche principalement-composée d'une résine possédant un point de fusion de 80°C à 150°C,
la couche principalement composée d'une résine possédant un point de fusion supérieur à 150°C possède une épaisseur de 2 μm ou plus, et
le séparateur de batterie se ferme à une température de 100 à 150°C et à une vitesse de 50 Ω/min·cm² ou plus.

2. Séparateur de batterie selon la revendication 1, dans lequel une résistance post-arrêt la plus élevée du séparateur de batterie par superficie unitaire est 500 Ω/cm² ou plus, la couche poreuse résistante à la chaleur (II) contient un liant organique, et les particules fines résistantes à la chaleur constituent 70 % en volume ou plus et 99 % en volume ou moins de la couche poreuse résistante à la chaleur (II).

3. Séparateur de batterie selon la revendication 1 ou 2, dans lequel le film poreux de résine (I) est un film microporeux stratifié à trois couches incluant deux couches composées de polypropylène et une couche composée de polyéthylène et interposée entre les deux couches composées de polypropylène.

4. Séparateur de batterie selon l'une quelconque des revendications 1 à 3, dans lequel la couche principalement composée de la résine possédant un point de fusion supérieur à 150°C possède une épaisseur de 10 μm ou moins.

5. Séparateur de batterie selon la revendication 1 ou 2, dans lequel la résine (A) du film poreux de résine (I) comprend du polyéthylène seul ou en tant que composant principal.

6. Séparateur de batterie selon l'une quelconque des revendications 1 à 5, dans lequel les particules fines résistantes à la chaleur incluses dans la couche poreuse résistante à la chaleur (II) sont des particules fines d'au moins une sélectionnée parmi le groupe constitué d'alumine, de silice et de boehmite.

7. Séparateur de batterie selon l'une quelconque des revendications 1 à 6, dans lequel au moins une partie des particules fines résistantes à la chaleur incluses dans la couche poreuse résistante à la chaleur (II) comprend des particules similaires à des plaques.

8. Séparateur de batterie selon l'une quelconque des revendications 1 à 7, dans lequel au moins une partie des particules fines résistantes à la chaleur incluses dans la couche poreuse résistante à la chaleur (II) comprend des particules fines possédant une structure de particules secondaires formées par l'agglomération de particules primaires.

9. Séparateur de batterie selon l'une quelconque des revendications 1 à 8, dans lequel la porosité A de la couche poreuse de résine (I) et la porosité B de la couche poreuse résistante à la chaleur (II) satisfont à la relation A ≤ B.

10. Séparateur de batterie selon l'une quelconque des revendications 1 à 9, dans lequel la couche poreuse de résine (I) possède une épaisseur de 5 μm à 30 μm.

11. Séparateur de batterie selon l'une quelconque des revendications 1 à 10, dans lequel la couche poreuse résistante à la chaleur (II) possède une épaisseur de 1 μm à 10 μm.

12. Batterie comprenant une électrode positive possédant un matériau actif capable d'intercaler et de désintercaler un ion Li, une électrode négative possédant un matériau actif capable d'intercaler et de désintercaler un ion Li, un électrolyte organique et le séparateur de batterie selon l'une quelconque des revendications 1 à 11.

EP 2 573 837 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200766768 A1
- EP 2153990 A
- US 20040106037 A
- WO 2010143677 A
- JP 2011008966 A
- JP 2007118588 A
- JP 2011044419 A
- JP 2003206475 A